# EUROPEAN PATENT APPLICATION

(11) **EP 3 493 135 A1**
(43) Date of publication of application: **05.06.2019**
(21) Application number: 17834650.8
(22) Date of filing: 29.06.2017
(51) Int. Cl.: G06Q 30/02, G06Q 50/10, G06T 19/00, H04N 5/225, H04N 5/232

(54) **VR VIDEO ADVERTISEMENT SYSTEM AND VR ADVERTISEMENT PRODUCTION SYSTEM**

(30) Priority: 29.07.2016 US 201662368173 P; 26.09.2016 KR 20160123412
(71) Applicant: NEOZIN CO., LTD, Gyeonggi-do 13494 (KR)
(72) Inventor: PARK, Hyunjin, Seoul 06966 (KR); HWANG, Moonsang, Gyeonggi-do 13556 (KR)
(74) Representative: J A Kemp
(86) International application number: PCT/KR2017/006880
(87) International publication number: WO 2018/021707

(57) **Abstract**

The present invention relates to a Virtual Reality (VR) video advertisement system comprising: a content receiving unit for receiving VR video content; a content morphing unit for forming a composite VR content in which advertisement content is morphed in a predetermined morphing area of the VR video content; and a content output control unit for selectively outputting a part of the composite VR content to a particular imaging device depending on to a field of vision, wherein the morphing area is configured in a predetermined object included in the VR video content, and the advertisement content is thus displayed in the composite VR content through the predetermined object.

## Description

### TECHNICAL FIELD

The present invention relates to a method of providing a composite Virtual Reality (VR) content in which an advertisement content is morphed into VR video content.

### BACKGROUND ART

As a market for smart devices such as smart TVs and smart phones is getting bigger, advertisement systems that use them are gradually expanding. During a playback of a media file, an advertisement image or a moving image is output, and all objects in a video are also targeted for advertisement.

In recent years, Virtual Reality (VR) videos (or VR moving images) having more enhanced sense of reality by changing an area to be output according to a change in a user's field of view (FOV) have been developed to provide various interests to the user. However, since an advertisement image is displayed with partially obscuring a VR video, the user feels inconvenient in watching the video, which makes it difficult to continuously expose the advertisement.

### DETAILED DESCRIPTION OF THE DISCLOSURE

The present invention has been made to solve the above-mentioned problems and other drawbacks, and provides a VR video advertisement system capable of improving an advertisement effect without outputting a VR video.

The present invention also provides a VR advertisement production system that synthesizes an advertisement content with VR video content in a manner of preventing interference with a playback of the VR video while the VR video content is played back.

In addition, since a gaze of a user who watches a VR video can be measured, an advertisement content can be efficiently exposed without interfering with watching of the very VR video by morphing an independent advertisement image or video into an area around the user's gaze.

To achieve the aforementioned aspects and other advantages according to the present invention, there is provided a VR video advertisement system, including a content receiving unit to receive VR video content, a content morphing unit to generate a composite VR content in which advertisement content is morphed in a predetermined morphing area of the VR video content, and a content output control unit to selectively output a part of the composite VR content to a predetermined video output device (or imaging device) according to a field of view (or field of vision), wherein the morphing area is set to a specific object included in the VR video content, and the advertisement content is displayed in the composite VR content through the specific object.

In one embodiment, the advertisement content may include information for outputting an additional page, and the content output control unit may control the predetermined video output device to output the additional page based on the information when the advertisement content is selected while the composite VR video content is output.

In one embodiment, the information may correspond to execution information related to a specific application and/or Uniform Resource Locator (URL) information for accessing a specific server.

In one embodiment, the advertisement content may be shared together when the composite VR video content is shared with an external device or a server.

In one embodiment, the morphing area may be set in an additional object synthesized with the VR video content, and an output state of the additional object may be changed by a control command for adjusting an output field of view of the VR video content.

In one embodiment, the additional object may be displayed in an output area of the composite VR content output by the specific video output device even if a partial area of the field of view of the composite VR content is selectively output.

In one embodiment, the composite VR video content may include a specific field of view, and each of output areas included in different field of views may include the morphing area.

According to another aspect of the present invention, there is provided a Virtual Reality (VR) advertisement production system, including a content output unit to output VR video content having a specific field of view, a morphing area setting unit to set a morphing area on the VR video content based on a specific control command, and a content morphing unit to transform advertisement content to correspond to the morphing area and morph the advertisement content into the morphing area, so as to generate a composite VR content synthesized with the VR video content.

In one embodiment, the morphing area setting unit may provide at least one area of the VR video content as a recommended morphing area based on advertisement content provided from an advertisement content providing unit.

In one embodiment, the morphing area setting unit may synthesize an additional object including a morphing area with one area of the VR video content.

In one embodiment, the morphing area setting unit may set an output path of the additional object on the VR video content based on a control command of a user.

In one embodiment, the morphing area setting unit may set an output state of the additional object to be synchronized with an output state of a target object included in the VR video content based on a control command of a user.

In one embodiment, the content morphing unit may add to the morphing area an advertisement icon for outputting information related to the advertisement content in a selective manner.

### EFFECTS OF THE DISCLOSURE

According to the present invention, since advertisement content is morphed into a morphing area corresponding to one object constituting VR video content, an output of the VR video content can be controlled by a control command. Therefore, a sense of unity with the VR video content with the advertisement content is created by a control command generated by a user's interaction.

In addition, since advertisement content is output by being morphed into an additional object according to a user's gaze, the advertisement content can be exposed more while the VR video content is output without disturbing the user's watching the VR content.

Meanwhile, since a morphing area can be set in one area of a provided VR video content and advertisement content can be synthesized with the morphing area, a composite VR video content in which the advertisement content is morphed in a user-desired area can be provided.

### BRIEF DESCRIPTION OF THE DRAWINGS

FIG. 1 is a block diagram illustrating components of a VR video advertisement system in accordance with one embodiment of the present invention.
FIGS. 2A to 2D are views illustrating a control method of forming a composite VR content according to various embodiments.
FIG. 3A is a conceptual view illustrating a control method of morphing advertisement content into an additional object in accordance with another embodiment of the present invention.
FIG. 3B is a conceptual view illustrating the control method of FIG. 3A.
FIGS. 4A to 4C are views illustrating a method of controlling a composite VR video content including advertisement content in accordance with one embodiment of the present invention.
FIGS. 5A to 5C are views illustrating a VR advertisement production system for producing a composite VR video content.
FIGS. 6A to 6C are conceptual views illustrating a control method of morphing advertisement content using an additional object.
FIGS. 7A and 7B are conceptual views illustrating a video output device for outputting a composite VR video content.

### BEST MODE FOR CARRYING OUT PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

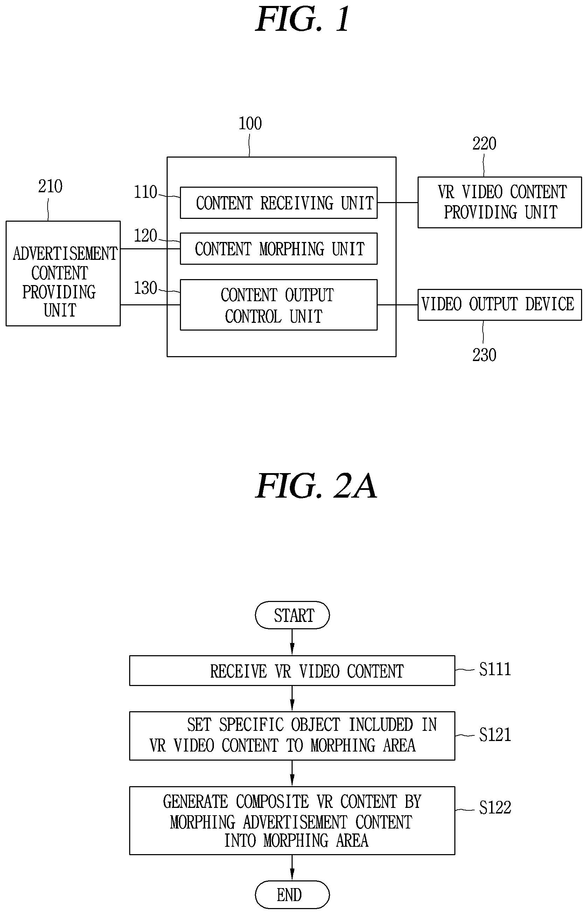

FIG. 1 is a block diagram illustrating components of a VR video advertisement system in accordance with one embodiment of the present invention.

A VR video (or moving image) advertisement system 100 includes a content receiving unit 110, a content morphing unit 120, and a content output control unit 130. The content receiving unit 110 receives VR video content from VR video content providing unit 220. The VR video content providing unit 220 may include various sources. For example, the VR video content providing unit 220 may include a specific server that provides a source of VR video content, a camera that captures VR video content, and the like.

The VR video content corresponds to image data captured in a specific field of view (a field of vision or a visual field). The VR video content may be output through a specific video output device (or imaging device), and may correspond to a still image and a video (or moving image) file that changes according to a lapse of time. Here, the specific imaging device corresponds to a video output device, such as a head mounted display (HMD), a mobile terminal including a display unit, a TV set, a PC, or the like, which outputs visual data.

For example, when the VR video content is output on a display unit of a video output device accessed to a specific server, the display unit may display an icon for controlling an output field of view. A video corresponding to a specific output field of view of a specific field of view constituting the VR video content is output through the video output device. Accordingly, when a field of view and a direction are changed by the icon, the display unit displays the remaining area of the VR video content according to a different output field of view.

However, a control command for changing the output field of view is not limited to the selection of the icon displayed on the display unit. The control command may be set differently depending on a type of video output device that outputs the VR video content.

The content morphing unit 120 receives advertisement content from a specific advertisement content providing unit 210. Here, the advertisement content providing unit 210 may correspond to an advertiser who wants to synthesize advertisement content into VR video content. The advertisement content may correspond to an image, a video (or a moving image), and the like. There is no limitation on a type of VR video content for forming a morphing area.

The content morphing unit 120 morphs the provided advertisement content into the VR video content. The VR video content may include at least one morphing area. The morphing area may correspond to an object included in the VR video content. The object may correspond to a specific area distinguished from other areas by a user. For example, the object may correspond to a building image, a road image, a human image, and the like, and may be designated and changed according to the user's setting.

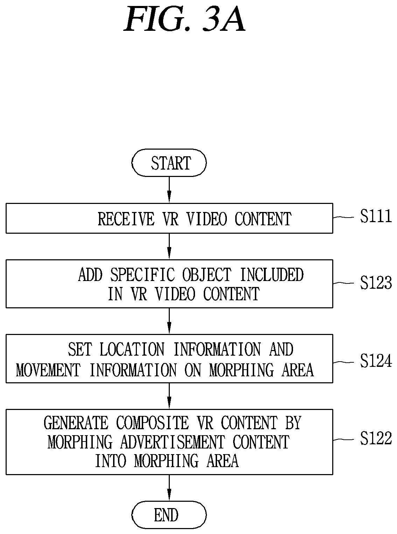

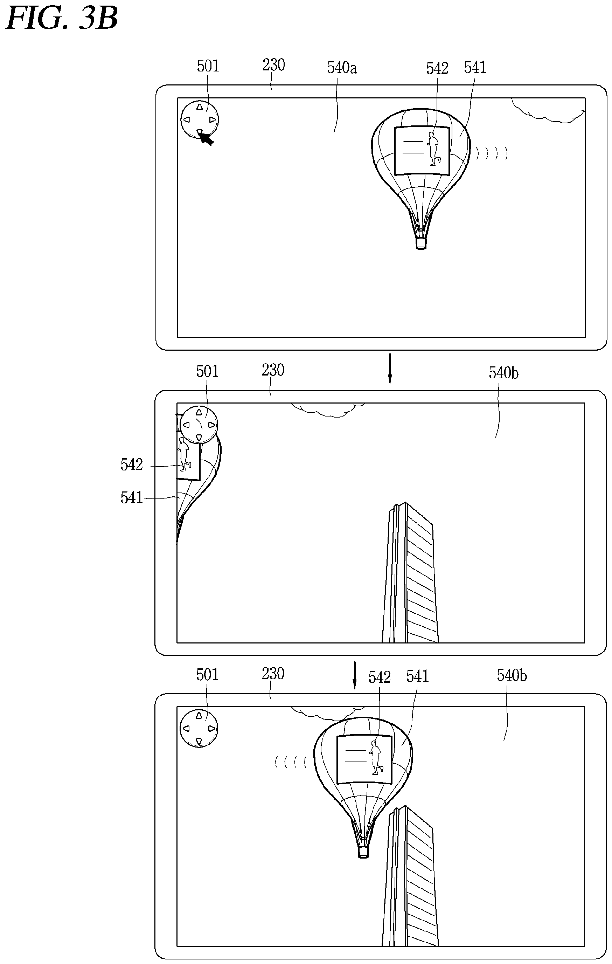

Meanwhile, the morphing area may be synthesized as an additional area on the VR video content. The morphing area may be controlled by a control command for changing the output field of view. This will be described in detail with reference to FIGS. 3A and 3B.

The content morphing unit forms a composite VR content (or synthesized VR content), such that the advertisement content is output through an object on the VR video content. The content morphing unit may provide the composite VR content to the advertisement content providing unit.

The composite VR content including the advertisement content is output by the video output device 230. There is no limitation on the type of the video output device 230. And the advertisement content is output by outputting the composite VR content. The output control unit selectively outputs a partial area of the composite VR content based on a specific control command. Further, the partial area, that is, the output field of view is changed based on a specific control command. The advertisement content that has been morphed in the composite VR content is output by the video output device 230 when the morphing area set as the object is included in the output field of view. In addition, when the output field of view is changed according to the control command, an output position, size, and shape of the object morphed with the advertisement content are changed. Also, an output position, size, and shape of the advertisement content are changed in response to the change of the output position, size and shape of the object. That is, the advertisement content is displayed so as to be seen integrally with the specific object.

According to the present invention, a partial field of view of the VR video content configured to have a specific viewing angle surrounding the user is output by a control command for changing a field of view, and advertisement content is synthesized with an object included in the field of view, thereby outputting the advertisement content to be the same as an output state of the object.

Accordingly, the user can be provided with advertisement content as a part of VR video content. This may result in solving a problem that the advertisement content obscures a part of an output area of the VR video content and also performing an advertisement function while realizing a sense of unity with the VR image content.

FIGS. 2A to 2D are views illustrating a control method of forming a composite VR content according to various embodiments.

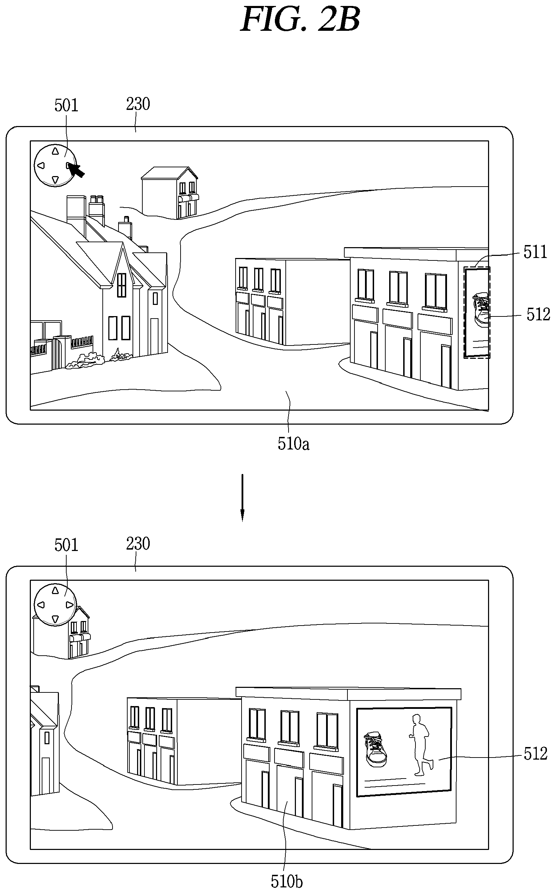

FIG. 2A is a flowchart illustrating a control method of a VR video advertisement production system in accordance with one embodiment of the present invention, and FIG. 2B is a conceptual view illustrating the control method of FIG. 2A.

Referring to FIGS. 2A and 2B, VR video content is received from VR video content providing unit 220 (S111). A specific object included in the VR video content is set as a morphing area (S121). An object which is included in the VR video content and distinguished from the remaining area or one area of the object may be set as the morphing area.

FIG. 2B illustrates VR video content output by a specific video output device 230. The video output device 230 outputs a first video area 510a corresponding to a first field of view of the VR video content. Also, a first control image 501 for changing the first video area 510a to a video area corresponding to another field of view may be output together according to a type of the video output device 230.

A specific object included in the VR video content is set as a morphing area 511 (S121). The specific object is an area distinguished from the remaining area, and corresponds to a building, person, road, river, etc. included in the VR video content unless otherwise specified. Alternatively, the morphing area may be set to include a plurality of objects, or to include partial areas of the plurality of objects.

One area of the VR video content corresponding to the morphing area 511 does not have to be included in an entire field of view.

A composite VR content is generated by morphing an advertisement content 512 into the morphing area (S122). When the advertisement content 512 is morphed into the morphing area, the advertisement content 512 is displayed by the object. The advertisement content 512 is synthesized as a part of the object, and is output in cooperation with the output state of the object.

For example, when the first video area 510a of the first field of view is output to the video output device 230, the object (building image) corresponding to the morphing area 511 is displayed on an edge area of the video output device 230, and only a part thereof is displayed in a shape located at a right side from the front. Accordingly, a partial area of the advertisement content 512 is output in a shape located at a right side from the front.

When the first field of view is changed to a second field of view based on a control command (the selection of the first control image 501 in FIGS. 2A and 2B) for changing the output field of view, the video output device 230 outputs a second video area 510b corresponding to the second field of view. In the second video area 510b, the object (building image) is output in a shape located at the front and the entire object is output. Accordingly, the advertisement content 512 is entirely exposed in a shape located at the front.

That is, the advertisement content output through the object is transformed in cooperation with the output of the object based on the control command for changing the output field of view. Accordingly, a composite VR content in which the advertisement content is synthesized with the VR video content to realize a sense of unity can be provided.

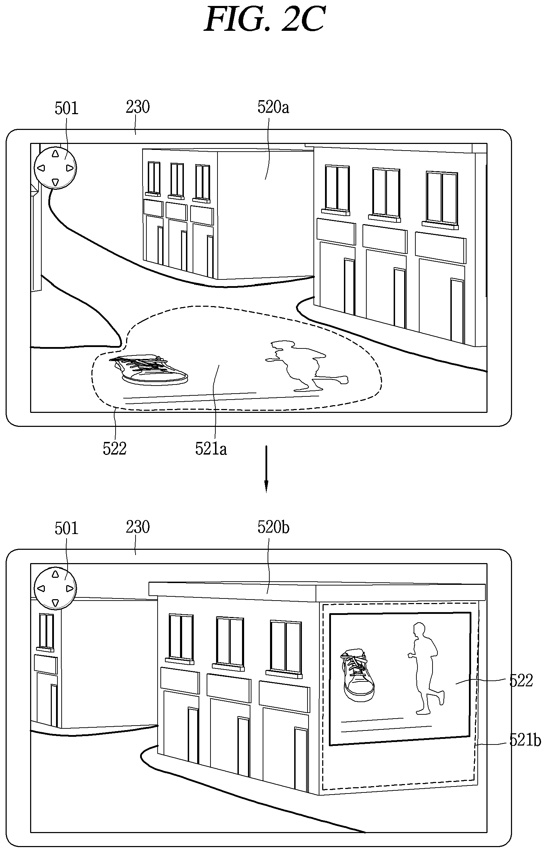

FIG. 2C is a conceptual view illustrating a control method of morphing an advertisement content into a different morphing area due to a change of an output field of view.

A plurality of morphing areas may be set in the VR video content. The plurality of morphing areas may be set within different output field of views of the VR video content, but the present invention is not limited thereto.

Referring to FIG. 2C, a first morphing area 522 is formed in a first video area 520a corresponding to a first field of view of the VR video content, and a second morphing area 522 is formed in a second video area 520b corresponding to a second field of view. Objects corresponding to the first and second morphing areas 520a and 520b may correspond to different types. For example, the first morphing area 520a may be set on a road in the first video area 520a, and the second morphing area 520b may be set on a building in the second video area 520b.

Substantially the same advertisement content may be morphed into the first and second morphing areas 520a and 520b, respectively. However, since the first and second morphing areas 520a and 520b corresponding to different objects have different sizes and shapes, the advertisement content morphed in the first and second morphing areas 520a and 520b is transformed into different shapes and sizes.

The advertisement content 522 applied to the second morphing area 521b is output when the second video area 520a is output by the control command for changing the field of view while the first video area 520a corresponding to the first field of view and including the advertisement content 522 morphed in the first morphing area 520a is output. In the drawing, the first morphing area 521a is not included in the second video area 520a and the second morphing area 521b is not included in the first video area 520a. However, the first and second morphing areas 521a and 521b may be included in both the first and second image areas 520a and 520b. In this case, the content output unit 130 may control the advertisement content 522 to be output to only one of the first and second morphing areas 251a and 251b.

According to this embodiment, when another area is output by the control command, the advertisement content can be output to a plurality of morphing areas. Therefore, the advertisement content can be exposed more while the VR video content is output.

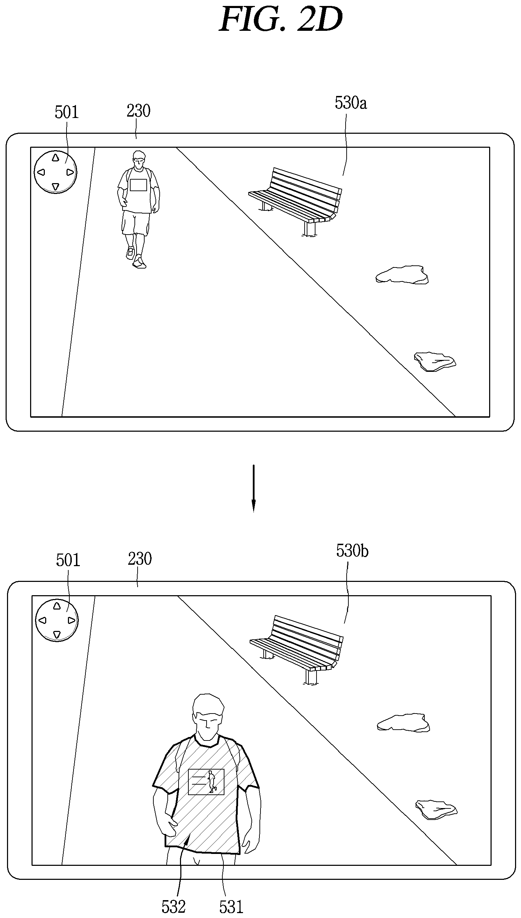

Referring to FIG. 2D, a control method of morphing an advertisement content into a moving object according to a lapse of time.

The content morphing unit 120 may form a morphing area 531 in an object which moves according to a lapse of time and synthesize an advertisement content 532 in the morphing area 531. However, the moving object may be set as the morphing area 531 in a video of VR video content in which an output size of the moving object is larger than or equal to a preset size.

The morphing area 531 may be set in a target (product or article) related to the advertisement content 531. For example, the target in which the morphing area 531 is set may correspond to clothes, a bag, or shoes that a human image wears, or various items that the human image holds, and also correspond to a logo attached to the target, or the like.

According to this embodiment, when an object to which an advertisement content is applied is moving close to a degree recognizable by the user in a video, the advertisement content is output. In particular, in the case of an advertisement content of an advertisement related to the object, it is possible to expose the advertisement content more realistically by using an advertisement image which seems to be formed in an actual product.

FIG. 3A is a conceptual view illustrating a control method of morphing an advertisement content into an additional object in accordance with another embodiment of the present invention, and FIG. 3B is a conceptual view illustrating the control method of FIG. 3A.

Referring to FIGS. 3A and 3B, VR video content is received (S111), and a specific object included in the VR video content is added (S123). The added specific object 541 may be a graphic image which is not included in the VR video content.

If the VR video content includes a plurality of images that change according to a lapse of time, the added object 541 may also include a plurality of images that change according to a lapse of time. The added object 541 is displayed to obscure one area of the VR video content, and the one area may change according to a lapse of time.

A morphing area is formed in the specific object. The morphing area may be formed in one area of the specific object.

The content morphing unit 120 may set a movement path of the added object 541 including the morphing area (S124). The added object 541 may be fixedly output in a specific area of the VR video content, but the present invention is not limited to this. The added object 541 may be set to be included in a video area displayed on the video output device 230 according to a field of view.

The content morphing unit 120 generates a composite VR video content by morphing an advertisement content into the morphing area of the added object 541 with the set output position (S122).

Referring to FIG. 3B, a first video area 540a corresponding to a first field of view of the composite VR video content is output, and the first video area 540a includes the added object 541 including the advertisement content 542. For example, the added object 541 may be a flying object flying in the sky, but is not limited thereto.

The first field of view is changed to a second field of view based on a control command, and a second video area 540d corresponding to the second field of view is output. The output position of the added object 541 including an advertisement content 542 is gradually changed by the control command, in response to the change of the field of view.

However, after a specific time elapses, the added object 541 is displayed at a specific position in the second video area 540d. That is, the added object 541 is moved based on the control command so as to improve the sense of unity with the VR video content. However, since the added object 541 is set to be output to a part of a video area corresponding to a current output field of view, the added object 541 can be continuously exposed, thereby improving an advertisement effect.

An advertisement content according to the present invention includes advertisement information together with visual data. The advertisement information may include connection information related to an advertisement page provided when the advertisement content is selected, execution information related to a specific application, and the like. Hereinafter, a method of controlling a composite VR video content including the advertisement content will be described.

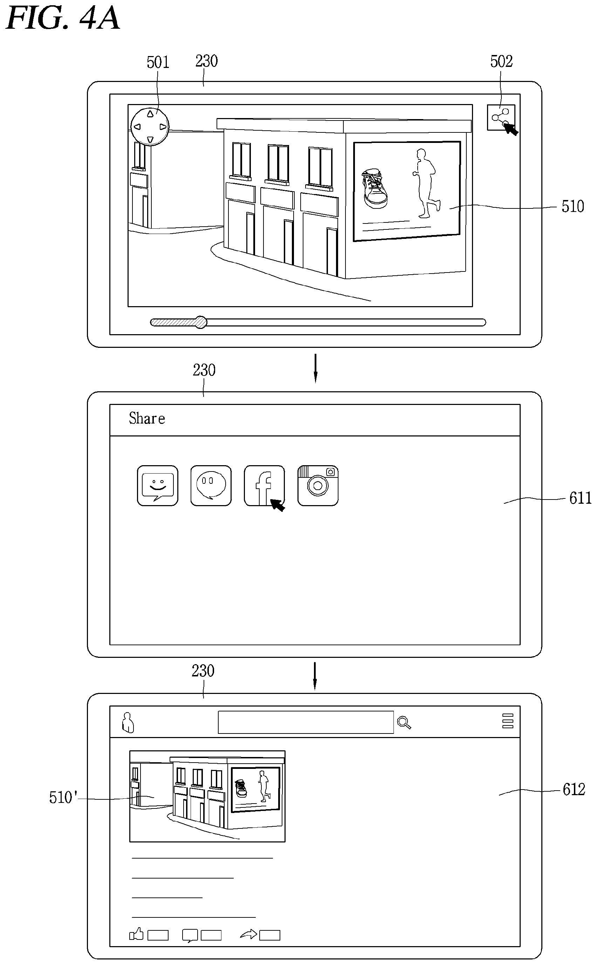

FIGS. 4A to 4C are views illustrating a method of controlling a composite VR video content including an advertisement content in accordance with one embodiment of the present invention.

Hereinafter, a method of sharing a composite VR video content including an advertisement content will first be described with reference to FIG. 4A. The composite VR video content 510 includes a second control image 502 for sharing a composite VR video content 510 with a specific server and/or a specific external device.

When the second control image 502 is selected, the composite VR video content can be shared. For example, when the second control image 502 is selected, the video output device 230 that outputs the composite VR video content 510 displays a selection screen 611 of an application for performing a sharing function.

When a specific application is selected, the composite VR video content 510 may be uploaded to a specific server. The composite VR video content 510 may be reproduced on the specific server, and the advertisement content formed in the morphing area is also output during the reproduction.

That is, since the advertisement content is provided not only when the composite VR video content is reproduced but also when the composite VR video content is shared, there is no need to share the advertisement content together each time the VR video content is shared. Therefore, a dispersion effect of the advertisement can be improved.

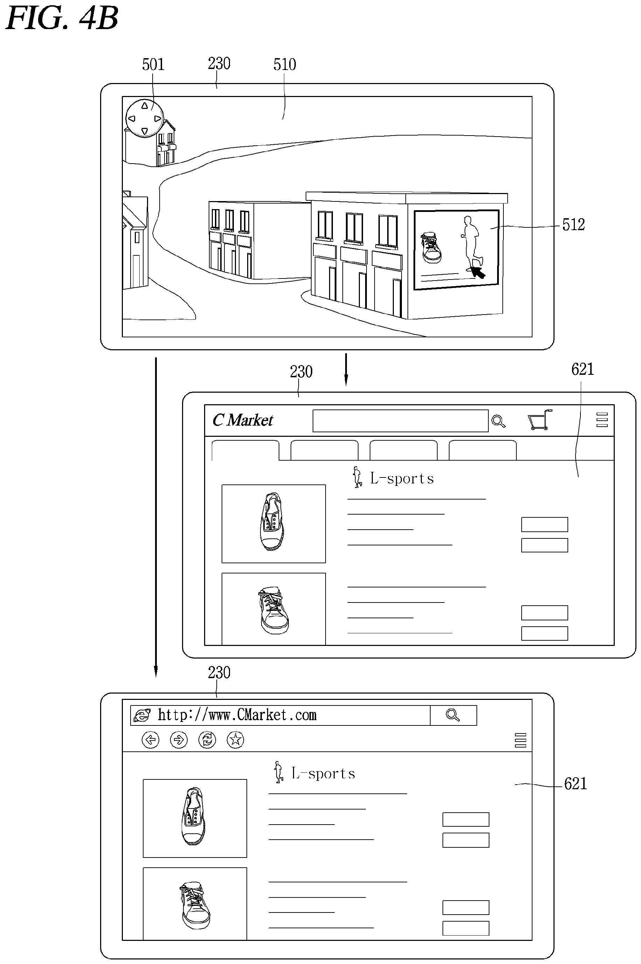

Referring to FIG. 4B, an advertisement content 512 included in the composite VR video content 510 includes related information such as execution information regarding a related application and/or a URL address of a web page, and outputs a related page 621 when selected. An application associated with the advertisement content may be executed by a control command for selecting the advertisement content included in the composite VR video content. That is, the application may be directly executed without a separate control command, or an installation screen of the application may be output.

Meanwhile, a web page may be provided using URL information linked to the advertisement content 512 included in the composite VR video content.

That is, a page related to the advertisement content may be immediately provided by a viewer while the composite VR video content is output.

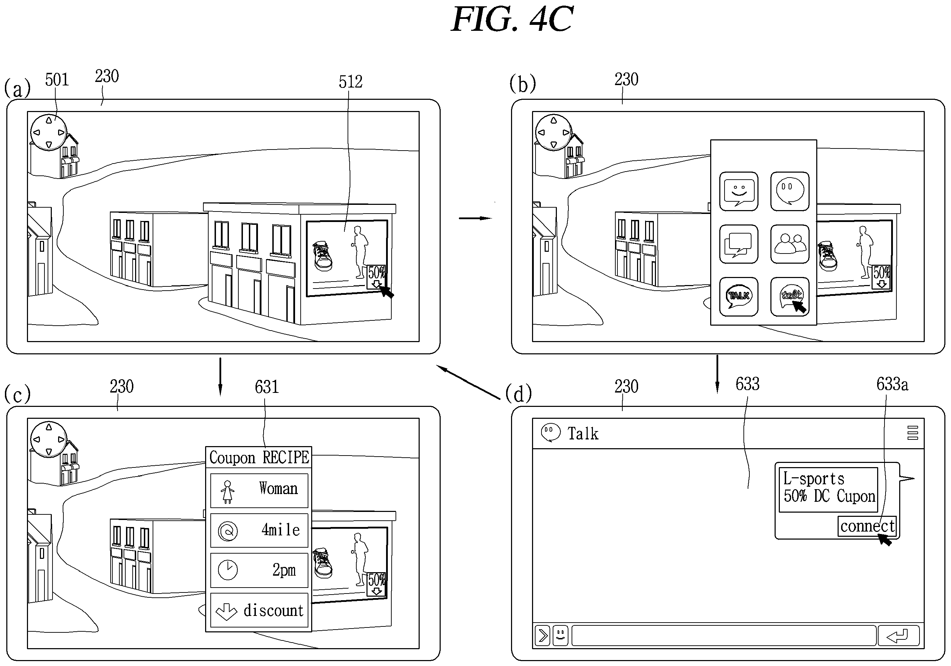

Referring to FIG. 4C, the advertisement content 512 morphed in the synthetic VR video content 510 may be made selectable. For example, the advertisement content can be clicked when the composite VR video content 510 is output to a monitor of a PC or a TV. Also, a touch input can be input to an area where the advertisement content is output when the composite VR video content is output to a display unit of a touch-sensitive mobile terminal.

Referring to (a) and (c) of FIG. 4C, the content output control unit 130 outputs a share window 631 associated with the advertisement content 512 when the advertisement content is selected while the composite VR video content is being output. That is, when the advertisement content 512 is selected, information related to the advertisement content 512 may be shared with an external device and/or a specific server. The related information may correspond to a coupon or the like that is included in the advertisement content 512 and can be used online or offline. The information may be transmitted to an object to be shared (for example, an external device detected as being located at a surrounding area, an external device cooperated by a specific application, a user satisfying a condition, etc.) selected from the share window 631.

In this case, the composite VR video content is not shared, and only specific information included in the advertisement content can be shared.

Meanwhile, when the advertisement content 512 included in the composite VR video content 510 is selected, an application selection window 632 for sharing the advertisement content 512 is output. A specific application is executed through the selection window 632 and an execution screen 623 of the specific application is controlled to be output.

Information 623a related to the advertisement content 512 is output to the execution screen 623. For example, the related information 623a may be transmitted to a specific external device, and the related information 623a may correspond to a coupon included in the advertisement content 512. In addition, a URL address by which the composite VR video content can be reproduced may be transmitted together with the related content.

In this case, the external device receiving the related information may receive the advertisement content again, as well as the related information, while playing back the composite VR video content.

According to these embodiments, information provided together with an advertisement content by a composite VR video content can be easily dispersed, thereby improving the advertisement effect.

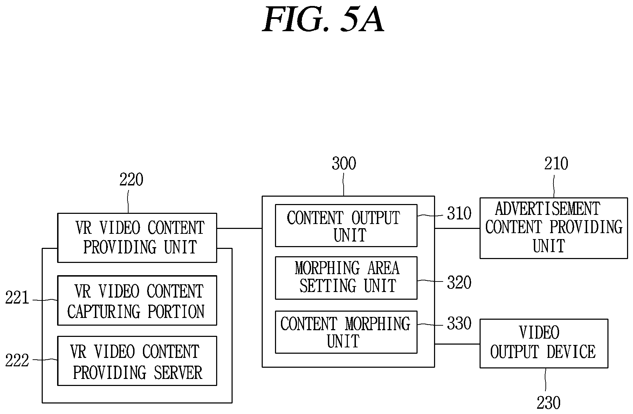

FIGS. 5A to 5C are views illustrating a VR advertisement production system for producing a composite VR video content.

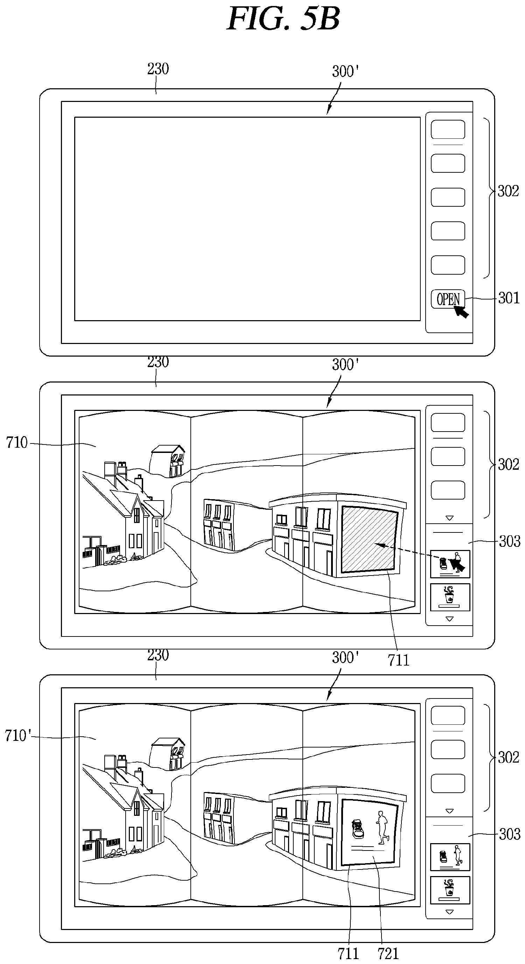

FIG. 5A is a block diagram illustrating components of a VR advertisement production system according to the present invention, and FIG. 5B is a conceptual view illustrating a control method of a VR advertisement production system according to one embodiment of the present invention.

Referring to FIGS. 5A and 5B, a VR advertisement production system 300 according to the present invention includes a content output unit 310, a morphing area setting unit 320, and a content morphing unit 330.

The VR advertisement production system 300 is implemented by a specific video output device. The content output unit 310 outputs VR video content provided through a display unit of a video output device 300'.

The VR video content is received by VR video content providing unit 220. There is no limitation on a type of the VR video content, and there are various subjects providing the VR video content. The VR video content providing unit 220 may include VR video content capturing portion 221 having a camera for capturing a VR video, and VR video content providing server 222.

The VR video content is output using a tool box 302 displayed on the image display device 300'. An entire field of view of the VR video content 710 is displayed on a two-dimensional plane. That is, the VR video content 710 is output in an unfolded state on a plane.

The morphing area setting unit 320 sets a morphing area 711 on the VR video content based on a specific control command. Referring to FIG. 5B, the control command is generated by a selection command applied on the VR video content 710, and a position and size of the morphing area 711 on the VR video content 710 or an object on the VR video content 710 in which the morphing area 711 is to be set may be selected based on the control command.

That is, the user can set a morphing area in a desired portion by applying a control command in a state in which the VR video content 710 is output.

The content morphing unit 330 morphs at least one advertisement content received from the advertisement content providing unit 210 into the morphing area 711. The advertisement content providing unit 210 may correspond to an advertiser.

The VR advertisement production system 300 outputs the received at least one advertisement content in a selectable state. That is, the video output device 300' displays an advertisement image 303 which indicates the advertisement content and is in a selectable state. An advertisement content 721 selected through the advertisement image 303 is transformed to correspond to the morphing area 711 based on the user's control command and is morphed into the morphing area 711 of the VR video content 710.

The content morphing unit 330 forms a composite VR content 710' in which the advertisement content 721 is morphed in the morphing area 711. Although not shown in detail, the content morphing unit 330 may further provide an edit tool for editing an advertisement content to be morphed into the morphing area 711.

According to this embodiment, the user may set a morphing area in an arbitrary area included in VR video content, and morph a desired advertisement content into the morphing area, which may facilitate production of a composite VR content.

The composite VR content is output by the video output device 230 and video areas of different fields of view are output based on a control command.

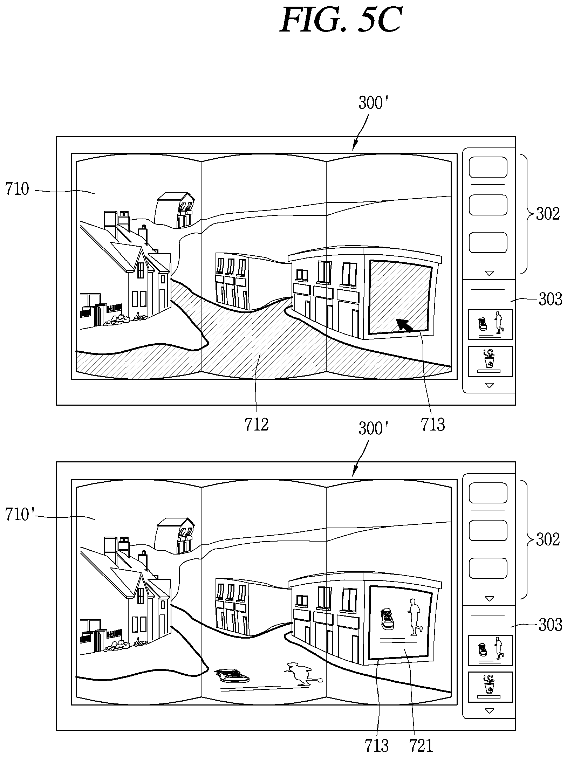

FIG. 5C is a conceptual view illustrating a feature of providing a recommended morphing area according to another embodiment.

Referring to FIG. 5C, when an advertisement content to be morphed into the VR video content is selected, the morphing area setting unit 320 provides at least one recommended morphing area. For example, when one advertisement content 721 is selected, the morphing area setting unit 320 provides first and second recommended morphing areas 712 and 713. The video output device 300' may highlight the first and second recommended morphing areas 712 and 713, which are different areas on the VR video content 710, and display the same. The first and second recommended morphing areas 712 and 713 may correspond to different objects or may be set in areas included in different fields of view.

In the state where the recommended morphing areas are provided, at least one recommended morphing area may be selected by the user's control command. The content morphing unit 330 forms a composite VR content 710' by morphing the selected advertisement content 721 into the selected second recommended morphing area 713.

According to this embodiment, it is more convenient for the user to synthesize an advertisement content by recommending one morphing area that matches a feature (characteristic) of the advertisement content and/or VR video content.

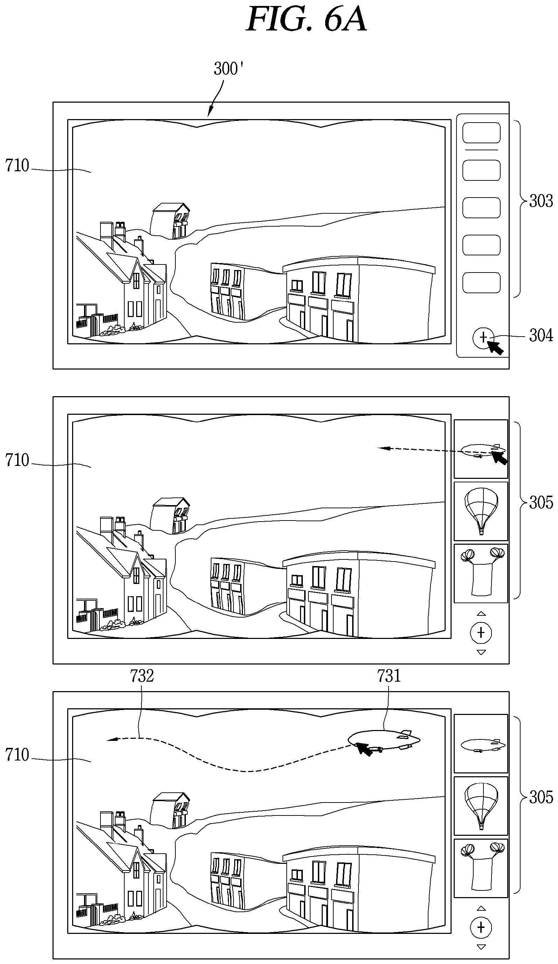

FIGS. 6A to 6C are conceptual views illustrating a control method of morphing an advertisement content using an additional object.

Referring to FIG. 6A, the VR video content 710 is output by the video output device 300', and an add tool 304 is output together with the tool box 303. When the add tool 304 is selected by a user's control command, images 305 of additional objects to be synthesized in the VR video content are displayed. An additional object 731 selected from the images 305 is synthesized with one area of the VR video content 710. A size and shape of the additional object may be changed based on a user's control command.

Also, the morphing area setting unit 320 may set an output path 732 of the additional object 731 based on a user's control command. The output path 732 is formed on the VR video content 710 displayed on the video output device 300 'in an unfolded or opened state.

The additional object 731 includes a morphing area. The content morphing unit 330 morphs the advertisement content into the morphing area of the additional object 731.

According to this embodiment, the user can form or select a desired object in VR video content and set an output area of the object so that an advertisement content is exposed more during the output of the VR video content.

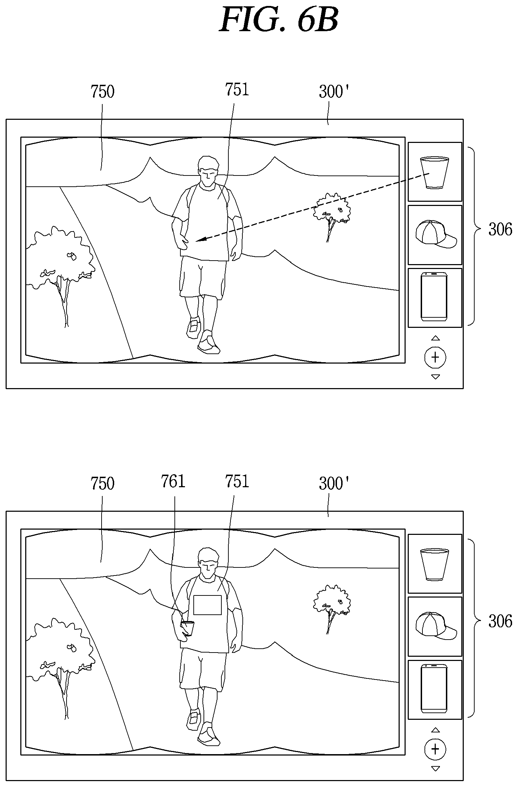

Hereinafter, a control method of synthesizing an additional object linked to an object included in VR video content will be described with reference to FIG. 6B.

The morphing area setting unit 320 synthesizes an additional object 761 on VR video content 750 by images 306. The additional object 761 includes a morphing area, and the advertisement content is morphed into the morphing area.

An output area of the additional object 761 is determined by a target object 751. The additional object 761 is synthesized to be cooperative with an output state of the target object 751 included in the VR video content. For example, if the target object 751 is a human image, the additional object 761 may be morphed into a hand area of the human image.

Accordingly, an additional object including an advertisement content can be output using an object included in VR video content, so that the advertisement content can be output more naturally.

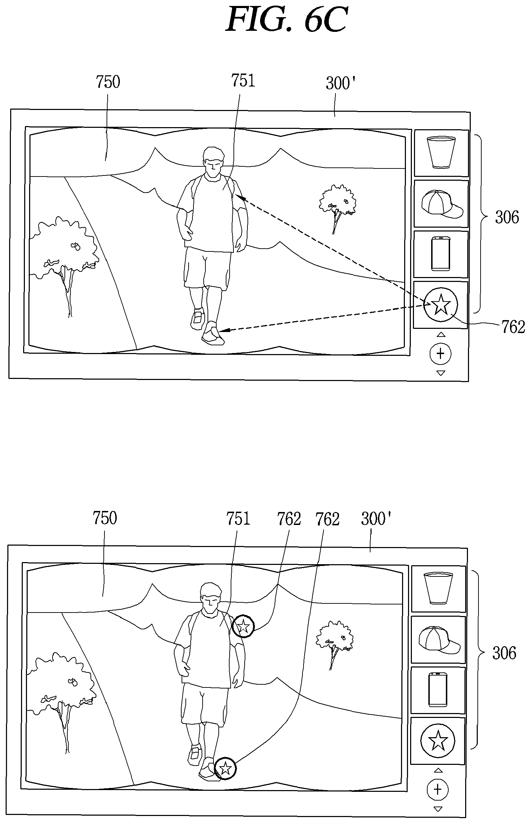

FIG. 6C is a conceptual view illustrating a control method of synthesizing an advertisement icon into a VR content.

The content morphing unit 330 may morph an advertisement icon into the VR video content 750 based on a control command applied to an icon add menu 762' in a state where the VR video content 750 unfolded is output on the video output device 300'.

The advertisement icon 762 is morphed into one selected area of the VR video content and is controlled together by a control command for controlling the output of the VR video content. The advertisement icon 762 includes a control signal for receiving a user's selection command and providing additional advertisement information.

The advertisement icon 762 may be displayed adjacent to an object of VR video content corresponding to a specific product. Also, although not shown in the drawing, the object itself may be an advertisement target, and the advertisement icon 762 may be additionally morphed in a state where the advertisement content has already been morphed into the object.

Even when the advertisement content is morphed naturally into an object constituting the VR video content, the user can recognize that the additional advertisement information can be provided by the advertisement icon 762.

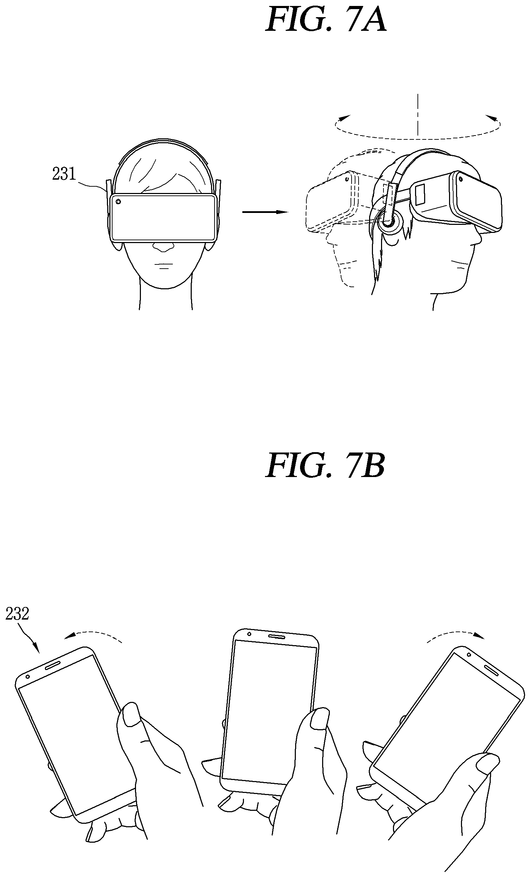

FIGS. 7A and 7B are conceptual views illustrating a video output device for outputting a composite VR video content.

FIG. 7A is a conceptual view illustrating a head-mounted display (HMD) unit 231. The HMD unit 231 is mounted on a head of the user and outputs VR video content through a display unit disposed on the front of the user's field of view or gaze.

The HMD unit 231 detects a movement of the user's head to generate a control command for changing an output field of view. Accordingly, another output area of the VR video content is displayed, in response to the user moving his head.

FIG. 7B shows a mobile terminal 232 including a display unit. The mobile terminal 231 detects a motion and generates a control command for changing the field of view. The motion includes rotation, movement, and the like relative to an axis of a body of the mobile terminal 232.

Therefore, the detailed description should not be limitedly interpreted in all the aspects and should be understood to be illustrative. Therefore, all changes and modifications that fall within the metes and bounds of the claims, or equivalents of such metes and bounds are therefore intended to be embraced by the appended claims.

## Claims

1. A Virtual Reality (VR) video advertisement system, comprising:
a content receiving unit to receive VR video content;
a content morphing unit to generate a composite VR content in which an advertisement content is morphed in a predetermined morphing area of the VR video content; and
a content output control unit to selectively output a part of the composite VR content to a specific video output device according to a field of view,
wherein the morphing area is set in a specific object included in the VR video content, and the advertisement content is displayed in the composite VR content through the specific object.

2. The system of claim 1, wherein the advertisement content includes information for outputting an additional page, and
wherein the content output control unit controls the specific video output device to output the additional page based on the information when the advertisement content is selected while the composite VR video content is output.

3. The system of claim 2, wherein the information corresponds to execution information related to a specific application and/or Uniform Resource Locator (URL) information for accessing a specific server.

4. The system of claim 1, wherein the advertisement content is shared together with the composite VR video content when the composite VR video content is shared with an external device or a server.

5. The system of claim 1, wherein the composite VR video content is shared together by a control command for sharing the information of the advertisement content with the external device and/or the specific server.

6. The system of claim 1, wherein the morphing area is set in an additional object synthesized with the VR video content, and an output state of the additional object is changed by a control command for adjusting an output field of view of the VR video content.

7. The system of claim 5, wherein the additional object is displayed in an output area of the composite VR content output by the specific video output device even if a partial area of the field of view of the composite VR content is selectively output.

8. The system of claim 1, wherein the composite VR video content includes a specific field of view, and
wherein each of output areas included in different field of views includes the morphing area.

9. A Virtual Reality (VR) advertisement production system, comprising:
a content output unit to output VR video content having a specific field of view;
a morphing area setting unit to set a morphing area on the VR video content based on a specific control command; and
a content morphing unit to transform an advertisement content to correspond to the morphing area and morph the advertisement content into the morphing area, so as to generate a composite VR content in which the advertisement content is synthesized with the VR video content.

10. The system of claim 9, wherein the morphing area setting unit provides at least one area of the VR video content as a recommended morphing area based on an advertisement content provided from an advertisement content providing unit.

11. The system of claim 9, wherein the morphing area setting unit synthesizes an additional object including a morphing area with one area of the VR video content.

12. The system of claim 11, wherein the morphing area setting unit sets an output path of the additional object on the VR video content based on a control command of a user.

13. The system of claim 11, wherein the morphing area setting unit sets an output state of the additional object to be synchronized with an output state of a target object included in the VR video content, based on a control command of a user.

14. The system of claim 9, wherein the content morphing unit adds to the morphing area an advertisement icon for outputting information related to the advertisement content in a selective manner.
